## Europäisches Patentamt
## European Patent Office
## Office européen des brevets

(19)

(11) Veröffentlichungsnummer: **0 082 444**
**A1**

(12) # EUROPÄISCHE PATENTANMELDUNG

(21) Anmeldenummer: **82111479.0**

(22) Anmeldetag: **10.12.82**

(51) Int. Cl.³: **A 01 B 73/00**
**B 62 D 53/02**

(30) Priorität: **12.12.81 DE 3149373**

(43) Veröffentlichungstag der Anmeldung:
**29.06.83 Patentblatt 83/26**

(84) Benannte Vertragsstaaten:
**AT CH FR GB LI**

(71) Anmelder: **Weichel, Ernst**
**Bahnhofstrasse 1**
**D-7326 Heiningen(DE)**

(72) Erfinder: **Weichel, Ernst**
**Bahnhofstrasse 1**
**D-7326 Heiningen(DE)**

(54) Breitspur-Geräteträger.

(57) Zur Herabsetzung der Anzahl von Fahrspuren auf landwirtschaftlichen Ackerböden ist vorgesehen, einen Schlepper bzw. Geräteträger mit weit über der für Straßenfahrt
zulässigen Gesamtbreite zu verwenden. Zum Zwecke des
Straßentransportes ist ein solches Gerät jedoch in oder quer
zu seiner Längsachse (L) in zwei etwa gleich große Hälften (I,
II) über Schnellkupplungsstücke (9) aufteilbar. Der Straßentransport dieser Gerätehälften erfolgt dann mittels zweier,
hintereinander aufgehängter Flachanhänger (17, 18), die
zudem Stütz- und Festsetzelemente zum Fixieren bzw.
Justieren der Gerätehälften (I und II) beim späteren Zusammenbau auf dem Feld aufweisen.

EP 0 082 444 A1

./...

Fig. 1

0082444

ERNST WEICHEL  7326 Heiningen, 07.12.1982

Bahnhofstraße 1

## Breitspur-Geräteträger

Die Erfindung bezieht sich auf einen insbesondere
für landtechnischen Einsatz geeigneten zweiachsigen
Schlepper bzw. Geräteträger, mit einer außerhalb
der für Straßenfahrt zulässigen Abmessungen liegenden Spurbreite nach dem Oberbegriff des Hauptanspruchs.

Bei der Feldbestellung in der Landwirtschaft besteht
generell der Wunsch, so wenig wie möglich der nutzbaren Bodenfläche durch Fahrspuren derart zu verdichten oder anderweitig zu zerstören, daß diese
Feldstreifen dem Anbau verloren gehen.

- 2 -

Zwangsläufig bietet sich dabei zwar eine Vergrößerung der Spurweite landwirtschaftlicher Schlepper oder Geräteträger bis hin zur doppelten Breite normaler Traktoren an, jedoch können eben solche maschinelle Einheiten nur dann vom Hof zum Feld oder von Feld zu Feld transportiert bzw. verfahren werden, wenn dabei keine öffentlichen Verkehrswege benutzt werden müssen; dies ist jedoch nur auf sehr wenigen Farmen oder abseits gelegenen Einzelgehöften dünn besiedelter Regionen der Fall.

Die vorliegende Erfindung hat sich deshalb die Aufgabe gestellt, Breitspur-Geräteträger derart auszubilden, daß sie mit einfachen Mitteln in eine für Straßentransport zulässige Abmessung umwandelbar sind.

Gelöst wird diese Aufgabe im wesentlichen durch die in den Patentansprüchen angegebenen Mittel und Maßnahmen, die in schematischer Form zudem

- 3 -

zeichnerisch dargestellt und anhand der
Zeichnungen als Beschreibung näher erläutert
sind.

Tragender Leitgedanke und damit technische
Lehre dieser erfindungsgemäßen Lösung zugleich,
sind dabei die Trennung bzw. Aufteilung der
maschinellen Grundeinheit in zwei etwa gleich
große und mittels Transportvorrichtungen normaler Abmessung verfahrbarer Teile, die am
Einsatzort durch möglichst schnellkuppelnde
Elemente wieder zusammengefügt werden können.

Zwar sind aus der DE-PS 2 322 504 bereits
Vierrad-Fahrzeuge in Form von Geräteträgern
o.ä. Einrichtungen bekannt, bei denen mittels
lösbarer Kupplungsvorrichtungen eine Aufteilung
in zwei voneinander unabhängige Einachsfahrgestelle vorgenommen werden kann, jedoch dient
dieser Teilungsvorgang lediglich dazu, den

- 4 -

Geräteaufbau durch unterschiedliche Geräteteile veränderlich und beliebig variabel zu
gestalten.

Ein wesentlicher Unterschied zur vorliegenden
Erfindung liegt somit bereits in der Aufgabenstellung. Die Zeichnungen zeigen:

Fig. 1   die Draufsicht auf einen erfindungsgemäßen Geräteträger,

Fig. 2   eine Alternativmöglichkeit zu

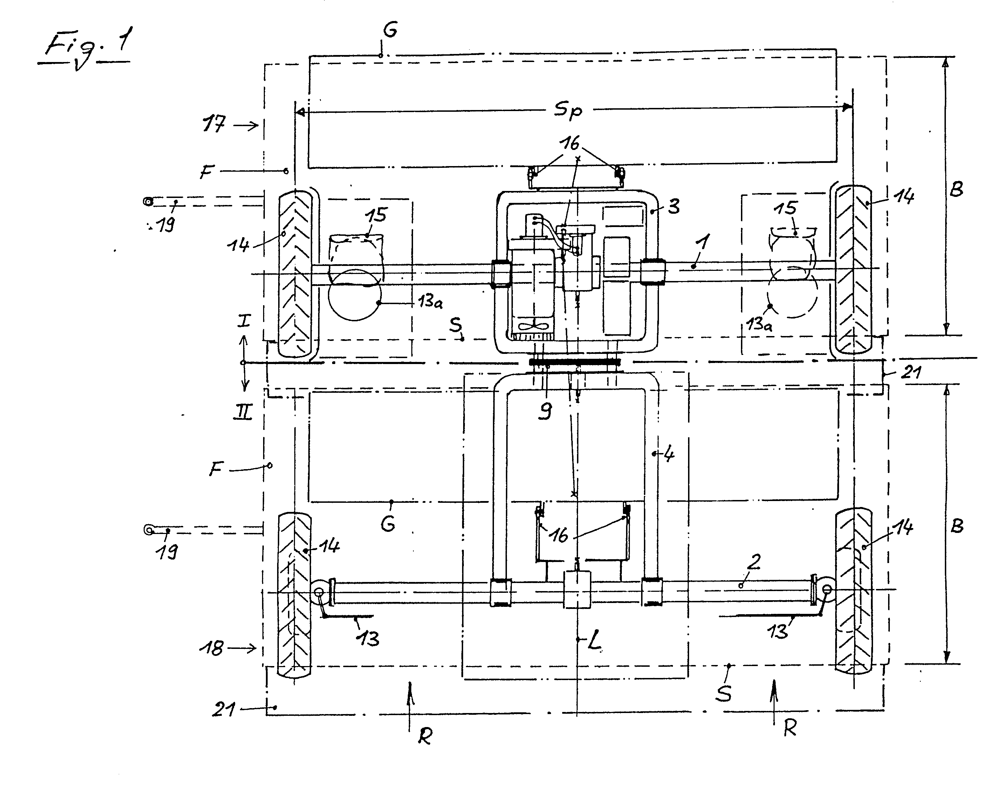

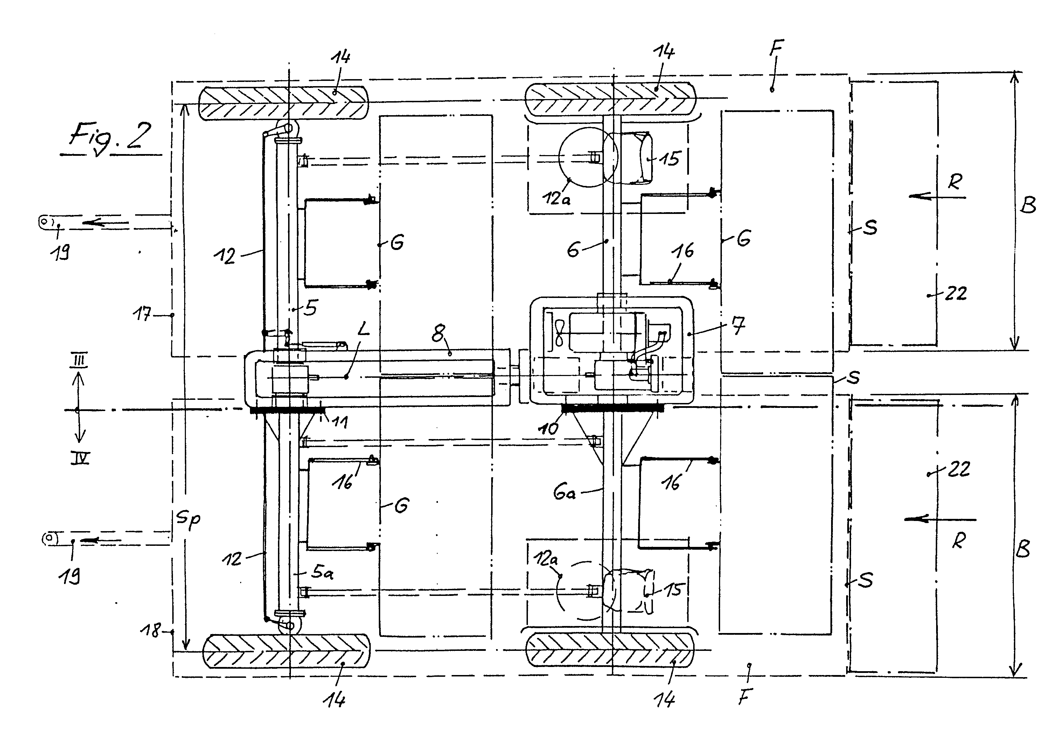

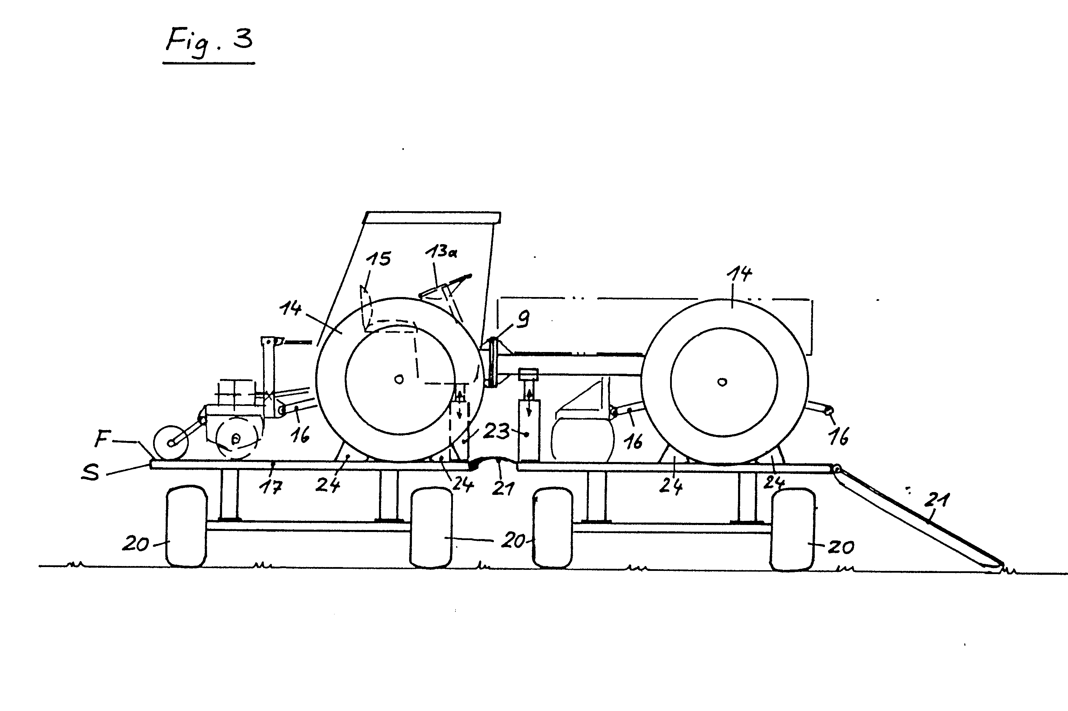

Fig. 1 und

Fig. 3   eine Seitenansicht zu Fig. 1.

Der in Fig. 1 in Umrißlinien angedeutete Geräteträger besteht in seinem Grundaufbau aus den
beiden Achsen 1 und 2 sowie dem Antriebsblock 3
und der Brücke 4, die über Kupplungselemente 9
derart miteinander verbunden sind, daß an dieser
Kupplungsstelle 9 eine Gerätetrennung quer zur

- 5 -

Gerätelängsachse L in die beiden etwa gleich großen Gerätehälften I und II erfolgen kann. Während die Spurbreite Sp eines Gesamtgerätes etwa der doppelten, für Straßenfahrt zulässigen Abmessung entspricht, liegt die Breite B der einzelnen Gerätehälften I und II innerhalb dieser Abmessungen, so daß diese Einzelteile I und II z.B. mittels Flachanhängern 17, 18 mit Zugdeichsel 19 und Rädern 20 vom Hof zum Feld bzw. zwischen den Feldern transportiert werden können. Diese Flachanhänger 17 bzw. 18 weisen dabei auf ihrer Ladefläche F bzw. an ihren seitlichen Begrenzungen S höhenverstellbare Stützelemente 23 und Festsetzelemente 24 für die Räder 14 auf, die neben einer Sicherung beim Straßentransport auch eine Nivellierung beim Zusammenbau erlauben, wenn die beiden Flachanhänger 17 und 18 infolge Feldunebenheiten o. dgl. nicht in exakter Höhe ihrer Kupplungsstellen 9 (bzw. 10,11 in Fig. 2) einander gegenüberstehen. Auffahr- bzw. Verbindungsrampen 21, 22 an den Flachanhängern 17, 18 überbrücken

- 6 -

den Abstand der Ladefläche F durch·die Räder 19 gegenüber dem Erdboden E. Zur Vervollständigung dieses Systems sind an den Geräteteilen I, II noch die Krafthebergestänge 16 für unterschiedliche Anbaugeräte G, sowie Fahrersitz 15 mit Lenkung 13a und Lenkgestänge 13, angedeutet.

Die Darstellung gemäß Fig. 2 unterscheidet sich von der nach Fig. 1 und 3 im wesentlichen nur dadurch, daß hier die Trennung des Gesamtgerätes in die beiden Transporthälften III und IV in Richtung der Fahrzeuglängsachse L erfolgt. Die Schnellkupplungselemente 10, 11 liegen somit jeweils zwischen Antriebsblock 7 bzw. Brücke 8 sowie benachbarter Halbachse 5a und 6a, während die anderen Halbachsen 5, 6 nicht lösbar sind. Lenkung 12a bzw. Lenkgestänge 12 sind hierzu analog ebenfalls trennbar.

Die Seitenansicht nach Fig. 3 veranschaulicht letztlich noch, wie ein trennbarer Geräteträger

- 7 -

auf zwei nebeneinander gestellten Flachanhängern 17, 18 in Montage- bzw. Transportstellung über die Rampen 21, 22 aufgefahren und mit den Stütz- sowie Festsetzelementen 23, 24 arretiert ist. Entgegen den Darstellungen nach Fig. 1 und 2 ist der Geräteträger hierbei in einer etwas anderen Ausführung, also mit einem weiter nach vorn gezogenen Motorblock 25 gezeichnet, ohne jedoch das erfindungsgemäße Prinzip zu verändern.

– 1 –

Patentansprüche

1. Zweiachsiger Schlepper bzw. Geräteträger, insbesondere für landtechnischen Einsatz, mit einer außerhalb der für Straßenfahrt zulässigen Abmessungen liegenden Spurbreite, sowie einer den Achsen zugeordnetem, aus Motor und Getriebe bestehenden, Antriebsblock, von dem aus sich zur anderen Triebachse eine in Fahrzeuglängsrichtung verlaufende Brücke o.dgl. als verbindendes Rahmenteil erstreckt, dadurch gekennzeichnet, daß die beiden Achsen (1, 2 bzw. 5 ,6) im Bereich von Antriebsblock (3 bzw. 7) und Brücke (4 bzw.8) liegende Kupplungselemente (9 bzw. 10, 11) zum Aufteilen des Gesamtgerätes in zwei annähernd gleich große Gerätehälften (I und II bzw. III und IV) aufweisen, die Teilung nach Auffahren des Gesamtgerätes auf zwei nebeneinander gestellte Flachanhänger (17, 18) gleicher, sowie für normale Straßen-

- 2 -

fahrt zulässiger Breite (B) erfolgt und diesen Anhängern (17, 18) Stütz- bzw. Justierungselemente (23, 24) zum Festsetzen der jeweiligen Gerätehälften (I, II bzw. III, IV) auf den Anhängern (17 bzw. 18) zugeordnet sind.

2. Schlepper bzw. Geräteträger nach Anspruch 1, dadurch gekennzeichnet, daß die Geräteteilung quer zur Fahrzeuglängsachse (L) erfolgt und jede der Gerätehälften (I und II) eine vollständige Achse.(1.bzw. 2) aufweist (Fig. 1).

3. Schlepper bzw. Geräteträger nach Anspruch 1, dadurch gekennzeichnet, daß die Geräteteilung in Fahrzeuglängsrichtung (L) erfolgt und an jeder der Gerätehälften (III und IV) zwei Halbachsen (5, 6 bzw. 5a, 6a) verbleiben.

- 3 -

4. Schlepper bzw. Geräteträger nach Anspruch
   1 und 2,
   dadurch gekennzeichnet,
   daß die Kupplungselemente (9) zwischen Antriebsblock (3) und Brücke (4) liegen (Fig. 1).

5. Schlepper bzw. Geräteträger nach den Ansprüchen 1 und 3,
   dadurch gekennzeichnet,
   daß die Kupplungselemente (10, 11) zwischen
   Antriebsblock (7) bzw. Brücke (8) und jeweils
   anliegender Halbachse (5a bzw. 6a) angeordnet
   sind (Fig. 2).

6. Schlepper bzw. Geräteträger nach den Ansprüchen
   1 bis 5,
   dadurch gekennzeichnet,
   daß die Kupplungselemente (9 bzw. 10,11) als
   selbstzentrierende Schnellverschlüsse o. dgl.
   ausgebildet sind.

- 4 -

7. Flachanhänger zum Straßentransport eines
   Schleppers bzw. Geräteträgers nach den vorhergehenden Ansprüchen,

   dadurch gekennzeichnet,

   daß die Ladefläche (F) bzw. die Anhängerseiten (S) mit höhenverstellbaren Stütz-
   bzw. Festsetzelementen (23, 24) für die
   jeweiligen Fahrzeughälften (I, II bzw. III,
   IV) versehen sind.


8. Flachanhänger nach Anspruch 7,

   gekennzeichnet durch

   Zuordnung einer klapp- oder ansetzbaren
   Auffahrrampe (21 bzw. 22) an mindestens
   einer der Anhängerseiten (S).

Fig.1

0082444

Fig. 2

Fig. 3

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | ---<br>DE-B-2 322 504 (MASSEY-FERGUSON SERVICES) | | A 01 B 73/00<br>B 62 D 53/02 |
| A | ---<br>FR-A-2 291 083 (GUTBROD WERKE GMBH)<br><br>----- | | |

**RECHERCHIERTE SACHGEBIETE (Int. Cl. ³)**

A 01 B 73/00
B 62 D 21/00
B 62 D 49/00
B 62 D 53/02

Der vorliegende Recherchenbericht wurde für alle Patentansprüche erstellt.

| Recherchenort<br>BERLIN | Abschlußdatum der Recherche<br>17-02-1983 | Prüfer<br>BERGZOLL M C |
|---|---|---|

KATEGORIE DER GENANNTEN DOKUMENTEN
X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
   nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82